# EUROPÄISCHE PATENTSCHRIFT

(11) **EP 0 932 915 B1**
(45) Veröffentlichungstag und Bekanntmachung des Hinweises auf die Patenterteilung: **16.08.2001**
(21) Anmeldenummer: 97912042.5
(22) Anmeldetag: 02.10.1997
(51) Int. Cl.: H01P 7/06, H05B 6/80, H05B 6/70, B01J 19/12, C04B 35/64, C21D 1/34, C22B 9/22, F27D 23/00

(54) **MIKROWELLENOFEN UND BAUTEILE HIERFÜR**
MICROWAVE OVEN AND COMPONENTS THEREFOR
FOUR A MICRO-ONDES ET ELEMENTS CONSTITUTIFS APPROPRIES

(30) Priorität: 16.10.1996 DE 19642673
(43) Veröffentlichungstag der Anmeldung: 04.08.1999
(73) Patentinhaber: Widia GmbH, 45145 Essen (DE)
(72) Erfinder: KÖNIG, Udo, D-45149 Essen (DE); RÖDIGER, Klaus, D-44869 Bochum (DE)
(74) Vertreter: Vomberg, Friedhelm, Dipl.-Phys.
(86) Internationale Anmeldenummer: DE9702293
(87) Internationale Veröffentlichungsnummer: WO9816965

(56) Entgegenhaltungen:
- EP-A- 0 285 781
- EP-A- 0 500 252
- DE-A- 2 743 754
- DE-A- 3 149 687
- GB-A- 2 262 333
- US-A- 2 981 908
- US-A- 3 845 270
- US-A- 4 578 658
- US-A- 5 420 401

## Beschreibung

Die Erfindung betrifft ein Bauteil nach dem Oberbegriff des Anspruches 1.

Die Erfindung betrifft ferner einen mit einem Resonatorgehäuse und mindestens einem dort angeflanschten Hohlleiters zur Mikrowelleneinstrahlung versehenen Mikrowellenofen.

Aus der US-A-4 578 658 sind ein Mikrowellenresonator und ein Mikrowellenhohlleiter zur Fortleitung von Mikrowellen mit hoher Energiedichte bekannt. Die Bauteile bestehen aus einem Trägerkörper aus einer mehrlagigen Beschichtung einer Dicke von ca. 5 µm aus Kupfer und Silber.

Bei der Sinterung von metallisch-keramischen Verbundwerkstoffen, wie Hartmetallen oder Cermets, in einem Mikrowellenresonatorofen ist es erforderlich, das Sintergut bis zu Temperaturen von 1800°C zu erwärmen, was zur Vermeidung von Wärmeverlusten thermische Isolierungen erforderlich macht. Grundsätzlich bestehen zwei Möglichkeiten, nämlich zum einen die zu sinternde Charge mit einem mikrowellentransparenten Isoliermaterial innerhalb des Resonators thermisch zu isolieren oder das Resonatorgehäuse außen zu isolieren.

Das innerhalb des Resonatorgehäuses verwendete Isoliermaterial, das meist aus hochreinen Aluminiumoxidschaummatten besteht, ist nicht nur sehr teuer, sondern hat auch den Nachteil, daß beispielsweise bei der Sinterung von Hartmetallen metallische Dämpfe in der Isolation sublimieren und zu einer Abnahme der Mikrowellentransparenz der genannten Schaummatten führen. Die Folge ist ein "Durchbrennen" der Isolierung aufgrund von Mikrowellenenergieabsorptionen.

Die thermische Außenisolierung des Resonatorgehäuses, die zwar nicht mikrowellentransparent sein muß, besitzt den Nachteil, daß alle im Resonatorgehäuseinnenraum befindlichen Teile, d.h., die Resonatorwände selbst, die Einkoppelhohlleiter, etwaige Meßfühler oder ähnliches, aus einem hitze- und atmosphärebeständigen Material bestehen muß, weshalb man nach dem Stand der Technik auf temperaturbeständige Metalle als Material für die Mikrowellenteile zurückgreift, die sowohl der Mikrowellenstrahlung als auch der Atmosphärentemperatur ausgesetzt sind. Hochtemperaturbeständige Metalle, wie beispielsweise Molybdän oder Wolfram, eigenen sich jedoch nicht als Material für Mikrowellen-Bauteile, da solche Metalle durch in der Sinteratmosphäre vorhandenen Kohlenstoff leicht carburieren. Graphit sowie andere prinzipiell in Betracht kommende temperaturfeste und sinteratmosphärenbeständige Werkstoffe besitzen jedoch eine bedeutend schlechtere elektrische Leitfähigkeit als Metalle, woraus sich erhebliche Mikrowellen-Leitungsverluste ergeben. Ein Graphit-Resonatorgehäuse verschlechtert somit die Resonator-Güte.

Es ist daher Aufgabe der vorliegenden Erfindung, ein Mikrowellenofen-Bauteil sowie einen Mikrowellenofen anzugeben, die unter Vermeidung der vorgenannten Nachteile zum Sintern von Hartstoffen verwendbar sind.

Diese Aufgabe wird durch das im Anspruch 1 beschriebene Bauteil gelöst.

Als Material für die Oberflächenschicht werden Carbide, Carbonitride oder Nitride der Elemente der IVa- bis VIa-Gruppe des Periodensystemes verwendet. Hiermit wird ein aus einem Träger und einer zumindest teilweise auf den Träger aufgebrachten Oberflächenschicht bestehender Verbundkörper geschaffen, dessen Träger aus einem hochtemperaturbeständigen Material und dessen Oberflächenschicht einer Dicke zwischen 0,1 µm bis 100 µm aus einem gegenüber dem Träger elektrisch leitfähigeren und gegenüber der eingestellten Sinteratmosphäre resistenten Material bestehen, das insbesondere in carburierender Atmosphäre bis zu hohen Temperaturen beständig ist. Die Oberflächenschicht wird erfindungsgemäß nur dort aufgetragen, wo eine entsprechende Mikrowellen-Fortleitung erforderlich ist und wo chemische Reaktionen mit der Ofenatmosphäre vermieden werden sollen. Dies betrifft insbesondere die Resonatorgehäuseinnenwandung sowie am Resonatorgehäuse angeordnete Hohlleiterteile innerhalb der thermischen Isolation.

Als Trägermaterial für die genannten Bauteile werden vorzugsweise Graphit, Oxidkeramiken, Mischkeramiken, SiC, Si₃N₄ oder AlN verwendet. Metalle, Metallegierungen (soweit sie temperaturbeständig sind) können ebenfalls verwendet werden, wenn sie durch eine allseitige, dichte Oberflächenbeschichtung vor den carburierenden Gasen geschützt werden. Vorzugsweise werden als Material für die Oberflächenschicht Carbide, Carbonitride oder Nitride des Titans verwendet. Die Oberflächenschicht kann ggf. mehrlagig bestehen, wobei die einzelnen Lagen aus gleichen oder verschiedenen Stoffen der genannten Zusammensetzung bestehen. Bevorzugte Schichtdicken liegen zwischen 1 µm bis 20 µm.

Nach einer weiteren Ausgestaltung der Erfindung ist die Oberflächenschicht oder sind die Lagen mittels eines CVD-Verfahrens bei 900°C bis 1100°C aufgebracht worden.

Die Aufgabe wird ferner durch einen Mikrowellenofen nach Anspruch 7 gelöst, dessen Resonatorgehäuseinnenwandung und/oder die innerhalb der thermischen Isolation befindliche oder mit der Sinteratmosphäre in Kontakt stehende Hohlleiteroberfläche, insbesondere Innenoberfläche mit einer maximal 100 µm dicken Schicht aus Carbiden, Nitriden und/oder Carbonitriden der Elemente der IVa- bis VIa-Gruppe des Periodensystemes beschichtet sind. Vorzugsweise bestehen das Resonatorgehäuse und/oder der Hohlleiter jeweils aus einem Graphit-Substratkern, wobei nach einer weiteren Ausgestaltung der Erfindung nur der innerhalb der thermischen Isolation befindliche Teil des Graphit-Hohlleiters beschichtet ist.

Nach einer weiteren Ausgestaltung des erfindungsgemäßen Mikrowellenofens ist zwischen einer das Resonatorgehäuse umrahmenden Isolation und dem Resonatorgehäuse eine elektrische Heizung (Hybridheizung) angeordnet, vorzugsweise in Form eines elektrischen Heizleiters.

Ausführungsbeispiele der Erfindung sind in den Zeichnungen dargestellt. Es zeigen
- Fig. 1: eine perspektivische Darstellung eines Mikrowellenhohlleiterstückes und
- Fig. 2 und 3: jeweils Schnittansichten durch einen Mikrowellenofen.

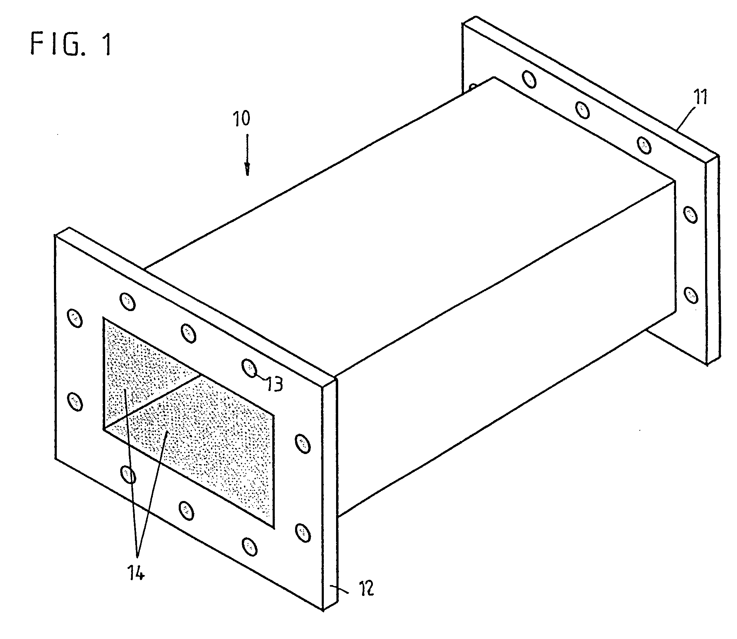

Der exemplarisch für Mikrowellenbauteile in Fig. 1 dargestellte Mikrowellenhohlleiter 10 ist kastenförmig aufgebaut und besitzt endseitig jeweilige Flansche 11 und 12 zur Befestigung weiterer Hohlleiterstücke und/oder an einem Ofen. Die Flansche 11 und 12 besitzen hierfür entsprechende Bohrungen 13. Erfindungsgemäß sind die Innenwände 14 des Hohlleiters mit einer 10 µm dicken Schicht aus TiC oder TiN beschichtet. Der Mikrowellenhohlleiter 10 besteht im übrigen aus Graphit. Gleichermaßen ist es beispielsweise möglich, im Mikrowellenofenraum befindliche Vollkörper, z.B. aus mikrowellentransparentem Material wie Al₂O₃ mit einer äußeren TiC-Beschichtung der genannten Dicke zu versehen. In diesem Fall dient die Beschichtung als Wand der im Vollköper laufenden Mikrowellen.

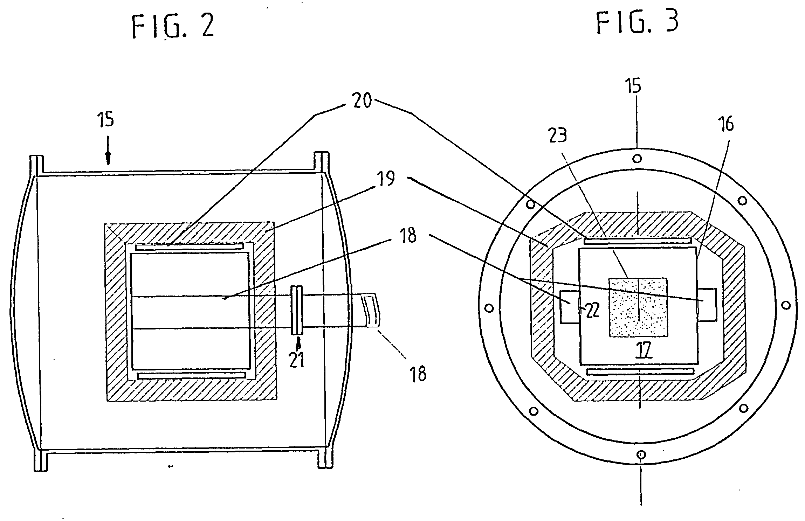

Der in Fig. 2 und 3 dargestellte Mikrowellenofen besteht aus einem Kessel 15, in dem sich ein Resonatorgehäuse 16 befindet, in dessen Innenraum 17 über entsprechend angeflanschte Hohlleiter 18 Mikrowellen der zur Einstellung der Sintertemperatur im Innenraum 17 benötigten Energiedichte einspeisbar sind. Die Hohlleiter 18 können aus einem Verbundmaterial, d.h, einem Metall-, Keramik- oder Graphitträger und einer (inneren) TiC-Beschichtung bestehen. In entsprechender Weise besteht das Resonatorgehäuse 16 aus Graphit mit einer an den dem Innenraum 17 zugewandten Wänden aufgetragenen TiN-Beschichtung. Um das Resonatorgehäuse ist eine Isolierung 19 angeordnet, die aus den nach dem Stand der Technik bekannten Isolationsmaterialien, die lediglich entsprechend temperaturfest sein müssen, bestehen kann. Zwischen der Isolierung 19 und dem Resonatorgehäuse 16 ist zur Vermeidung von großen Temperaturunterschieden zwischen der Sintercharge eine Hilfsheizung in Form von elektrischen Heizleitern 20 angeordnet. Die Mikrowelleneinspeisung geschieht über Graphithohlleiter, die außerhalb der thermischen Isolation durch Flanschverbindungen 21 mit gewöhnlichen Hohlleitern aus Messing, Kupfer oder Edelstahl verbunden werden (Fig. 1). Zur Durchführung des Hohlleiters besitzen der Kessel und die Isolierung entsprechende Durchbrechungen und das Resonatorgehäuse 16 geeignete Einlaßöffnungen 22.

Zur Sinterung von beliebigen Hartmetall- oder Cermet-Körpern, die als Charge 23 im Resonatorgehäuseinnenraum 17 auf einem Gestell oder ähnlichem angeordnet sind, wird ein geeignetes Mikrowellen-Energiefeld aufgebaut, wobei durch Mikrowellenabsorption die zur Charge gehörenden Teile auf die Sintertemperatur erwärmt werden. Hierbei wirkt die Hybridheizung unterstützend, indem sie einem Temperaturgradienten von außen nach innen entgegenwirkt. Anordnung und elektrische Leistung der Heizleiter sind so zu bemessen, daß die Temperatur der Resonatorwand der Chargentemperatur folgt. Die vorbeschriebene TiN-Schicht schafft den Vorteil, daß die Leitfähigkeit der betreffenden inneren Oberflächen gegenüber solchen aus Graphit bestehenden Flächen verbessert werden kann, insbesondere besitzen Graphitoberflächen einen elektrischen Widerstand von 12 µΩm, wohingegen der Widerstand der TiN-Oberfläche auf 0,22 µΩm erheblich gesenkt werden konnte. Hieraus ergeben sich weitaus geringere elektrische Verluste. Zudem hat die gewählte TiC-Innenbeschichtung den Vorteil, in der im Innenraum 17 bestehenden Sinteratmosphäre chemisch inert (auch bei hohen Sintertemperaturen) zu sein. Die Auswahl des (Träger-)Materials der Mikrowellenbauteile ist hierdurch erheblich vergrößert worden und kann nach mechanischen bzw. konstruktiven Gesichtspunkten erfolgen. Weiterhin schafft die vorliegende Erfindung den Vorteil, daß etwa abgenutzte Oberflächenschichten ohne großen Aufwand nachbeschichtet werden können.

## Patentansprüche

1. Bauteil für einen Mikrowellenofen, insbesondere einen Mikrowellenhohlleiter (10) und/oder einen Mikrowellenresonator (16) (Cavity) zur Fortleitung von Mikrowellen mit hoher Energiedichte bei hohen Temperaturen zwecks Sinterung von Hartstoffen, das aus einem einen aus einem hochtemperaturbeständigen Material bestehenden Träger und eine zumindest teilweise auf den Träger aufgebrachten Oberflächenschicht (14) aufweisenden Verbundkörper besteht,
**dadurch gekennzeichnet,**
daß die Oberflächenschicht (14) aus Nitriden, Carbiden oder Carbonitriden der Elemente der IVa- bis VIa-Gruppe des Periodensystemes besteht und eine Dicke zwischen 0,1 µm bis 100 µm aufweist.

2. Bauteil nach Anspruch 1, dadurch gekennzeichnet, daß der Träger aus Graphit oder einem Metall, einer Metallegierung, Oxidkeramiken, Mischkeramiken, SiC, Si₃N₄ oder AlN besteht.

3. Bauteil nach Anspruch 1 oder 2, dadurch gekennzeichnet, daß die Oberflächenschicht (14) aus TiC, TiCN oder TiN besteht.

4. Bauteil nach einem der Ansprüche 1 bis 3, dadurch gekennzeichnet, daß die Oberflächenschicht (14) mehrlagig ist, wobei die einzelnen Lagen aus gleichen oder verschiedenen Materialien bestehen.

5. Bauteil nach einem der Ansprüche 1 bis 4, gekennzeichnet durch eine Schichtdicke von 1 µm bis 20 µm.

6. Bauteil nach einem der Ansprüche 1 bis 5, dadurch gekennzeichnet, daß die Oberflächenschicht (14) oder Lagen mittels eines CVD-(Chemical Vapour Deposition)Verfahrens bei 900°C bis 1100°C aufgebracht worden sind.

7. Mikrowellenofen mit einem Resonatorgehäuse (16) (Cavity) und mindestens einem dort angeflanschten Hohlleiter (18) zur Mikrowelleneinstrahlung, wobei die Resonatorgehäuseinnenwandung und/oder die innerhalb der thermischen Isolation befindliche oder mit der Sinteratmosphäre in Kontakt stehende Hohlleiteroberfläche beschichtet ist, dadurch gekennzeichnet, daß die Hohlleiteroberfläche, insbesondere die Hohlleiterinnenoberfläche oder die Hohlleiteraußenfläche eines mikrowellentransparenten Vollkörpers mit einer maximal 100 µm dicken Schicht aus Carbiden, Nitriden und/oder Carbonitriden der IVa- bis VIa-Elemente beschichtet sind.

8. Mikrowellenofen nach Anspruch 7, dadurch gekennzeichnet, daß das Resonatorgehäuse und/oder der Hohlleiter jeweils einen Substratkern aus Graphit besitzen.

9. Mikrowellenofen nach einem der Ansprüche 7 oder 8, dadurch gekennzeichnet, daß zwischen einer das Resonatorgehäuse (16) umrahmenden Isolation (19) und dem Resonatorgehäuse (16) eine elektrische Heizung (Hybridheizung) (20) angeordnet ist, vorzugsweise in Form eines elektrischen Heizleiters (20).

## Claims

1. Component for a microwave oven, in particular a microwave waveguide (10) and/or a microwave resonator (16) (cavity) for conducting microwaves of high energy density at high temperature for sintering hard materials, which consisting of a compound body comprising a support of a highly heat-resistant material having a surface coating (14) at least partially,
**characterized in that**
the surface coating (14) consists of nitrides, carbides, or carbonitrides of elements of the IVa to VIa groups of the periodic system and has a thickness between 0,1 *µ*m and 100 *µ*m.

2. Component according to claim 1, characterized in that the support consists of graphite or a metal, a metal alloy, oxide ceramics, composite ceramics, SiC, Si₃N₄, or AlN.

3. Component according to claim 1 or 2, characterized in that the surface coating (14) consists of TiC, TiCN, or TiN.

4. Component according to one of claims 1 to 3, characterized in that the surface coating (14) has plural layers and the individual layers are made of the same or different materials.

5. Component according to one of claims 1 to 4, characterized by a coating thickness from 1 *µ*m to 20 *µ*m.

6. Component according to one of claims 1 to 5, characterized in that the surface coating (14) or layers are applied by a CVD (chemical-vapor-deposition) method at 900°C to 1100°C.

7. Microwave oven with a resonator housing (16) (cavity) and at least one flanged there on waveguide (18) for microwave irradiation, whereby the inner wall of the resonator housing and/or the waveguide surface inside the thermal insulation or in contact with the sintering atmosphere is coated, characterized in that the waveguide surface, in particular the waveguide inside surface or the waveguide outer surface of a microwave-transparent compact body is coated with a layer having a thickness of at most 100 *µ*m and consisting of carbide, nitride, and/or carbonitrides of the IVa to VIa elements.

8. Microwave oven according to claim 7, characterized in that the resonator housing and/or the waveguide each have a graphite substrate core.

9. Microwave oven according to one of claims 7 or 8, characterized in that between the insulation (19) surrounding the resonator housing (16) and the resonator housing (16) there is an electrical heater (hybrid heater) (20), preferably in the form of an electrical heater (20).

## Revendications

1. Composant pour un four à micro-ondes, en particulier un guide d'ondes pour micro-ondes (10) et/ou un résonateur à micro-ondes (16) (cavity) pour la conduite de micro-ondes avec une grande densité de flux d'énergie à des températures élevées aux fins de frittage de matières dures, qui se compose d'un corps composite qui présente un support se composant d'une matière résistante aux températures élevées ainsi qu'une couche superficielle (14) appliquée au moins en partie sur ledit support,
**caractérisé par le fait**
que la couche superficielle (14) se compose de nitrures, de carbures ou de carbonitrures des éléments du groupe IVa à Vla de la classification périodique des éléments et qu'elle présente une épaisseur comprise entre 0,1 µm et 100 µ m.

2. Composant selon la revendication 1, caractérisé par le fait que ledit support se compsoe de graphite ou d'un métal, d'un alliage métallique, de céramiques d'oxyde, de céramiques mixtes, de SiC, de Si₃N₄ ou de AlN.

3. Composant selon la revendication 1 ou 2, caractérisé par le fait que la couche superficielle (14) se compose de TiC, de TiCN ou de TiN.

4. Composant selon l'une des revendications 1 à 3, caractérisé par le fait que la couche superficielle (14) présente plusieurs couches, les couches individuelles se composant de matières identiques ou différentes.

5. Composant selon l'une des revendications 1 à 4, caractérisé par une épaisseur des couches comprise entre 1 µm et 20 µm.

6. Composant selon l'une des revendications 1 à 5, caractérisé par le fait que la couche superficielle (14) ou les couches a été ou bien ont été appliquée(s) au moyen d'un procédé CVD (chemical vapour deposition), à des températures comprises entre 900°C et 1100°C.

7. Four à micro-ondes comprenant un boîtier de résonateur (16) (cavity) et au moins un guide d'ondes (18) y bridé pour l'irradiation de micro-ondes, la paroi intérieure du boîtier de résonateur et/ou la surface du guide d'ondes, qui se trouve à l'intérieur de l'isolation thermique ou en contact avec l'atmosphère de frittage étant revêtue, caractérisé par le fait que la surface du guide d'ondes, en particulier la surface intérieure de guide d'ondes ou la surface extérieure de guide d'ondes d'un corps compact transparent pour les micro-ondes est revêtue d'une couche en carbures, en nitrures et/ou en carbonitrures des éléments IVa à Vla, qui présente une épaisseur maximale de 100 µm.

8. Four à micro-ondes selon la revendication 7, caractérisé par le fait que le boîtier de résonateur et/ou le guide d'ondes présentent respectivement un noyau substrat en graphite.

9. Four à micro-ondes selon l'une des revendications 7 ou 8, caractérisé par le fait qu'un chauffage électrique (chauffage hybride) (20), de préférence sous forme d'un conducteur chauffant électrique (20), est disposé entre une isolation (19) entourant le boîtier de résonateur (16) et le boîtier de résonateur (16).
